# EUROPÄISCHE PATENTSCHRIFT

(11) **EP 1 407 908 B1**
(45) Veröffentlichungstag und Bekanntmachung des Hinweises auf die Patenterteilung: **28.02.2007**
(21) Anmeldenummer: 03019715.6
(22) Anmeldetag: 29.08.2003
(51) Int. Cl.: B60H 1/32, B60H 1/00

(54) **Klimaanlage mit kältespeicherndem Verdampfer**
Air conditiong device comprising a cold accumulating evaporator
Appareil de climatisation comprenant un évaporateur-accumulateur de froid

(30) Priorität: 09.10.2002 DE 10247083
(43) Veröffentlichungstag der Anmeldung: 14.04.2004
(73) Patentinhaber: Behr GmbH & Co. KG, 70469 Stuttgart (DE)
(72) Erfinder: Bureau, Cathy, 70195 Stuttgart (DE); Dieksander, Wolfgang,, 70794 Filderstadt (DE); Kühnel, Wolfram, Dr., 70374 Stuttgart (DE); Morgenstern, Stefan, 70499 Stuttgart (DE); Otto, Jürgen, 75428 Illingen (DE)

(56) Entgegenhaltungen:
- EP-A- 0 236 216
- DE-A- 10 156 944
- DE-A- 19 751 702
- DE-A- 19 847 158

## Beschreibung

Die Erfindung betrifft eine Klimaanlage für ein Kraftfahrzeug gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das beim Abkühlen von feuchter Luft anfallende Kondensat zu vereisen, so dass im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, dass bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so dass diese bekannte Klimaanlage erst nach einer relativ langen Fahrzeit im Idle-stop-Betrieb arbeiten kann. Ein weiteres Problem ist, das in der Regel der Verdampfer ungleichmäßig vereist, so dass der Verdampfer vereiste und nicht vereiste Bereiche aufweist. Des weiteren kann die Vereisung so stark sein, dass die Luft durch den Verdampfer nicht oder nur mit hohem Druckverlust strömen kann. In jedem Fall erzeugt die Eisschicht einen luftseitigen Druckverlust, was zu einer erhöhten Gebläseleistung führt.

Aus der DE 197 51 702 A1 ist eine Fahrzeugklimaanlage bekannt, bei der ein Verdampfer, der unter einem hohen Verdampfungsdruck arbeitet, das Innere des Fahrzeugs klimatisiert, während der andere Verdampfer, der mit einem niedrigen Verdampfungsdruck arbeitet, ein Kältespeichermaterial gefriert um dann, wenn das Fahrzeug geparkt wird und inaktiv ist, die latente Wärme des Kältespeichermaterials zum Klimatisieren des Fahrzeuginneren zu verwenden.

Die DE 198 47 158 A1 zeigt eine Klimaanlage für ein Fahrzeug, bei der ein Kanal in einem Klimatisierungsgehäuse in einen ersten Luftkanal, durch den hindurch Innnenluft strömt, und in einen zweiten Luftkanal aufgeteilt ist, durch den hindurch Außenluft strömt.

Ferner ist aus der DE 101 56 944 A1 als nächster Stand der Technik eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist anstelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Verdampfer einzeln oder durch beide Verdampfer gemeinsam leitbar ist. Die Offenbarung der DE 101 56 944 A1, insbesondere in Hinblick auf den allgemeinen Aufbau der Klimaanlage und des bzw. der Verdampfer, wird ausdrücklich in die vorliegende Anmeldung einbezogen. Jedoch lassen auch entsprechende Klimaanlagen noch Wünsche offen.

Ausgehend von diesem Stand der Technik ist es Aufgabe der Erfindung eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß sind zwei in einem gemeinsamen Luftführungsgehäuse angeordneten Verdampfer zum Abkühlen von zu konditionierender Luft für den Fahrzeuginnenraum vorgesehen, von denen einer zusätzlich ein Kältespeichermedium enthält, wobei die zu konditionierende Luft wahlweise durch jeden Verdampfer einzeln oder durch beide Verdampfer gemeinsam in den Fahrzeuginnenraum leitbar ist. Die zu konditionierende Luft ist durch mindestens zwei Luftkanäle den Verdampfern zuführbar, wobei in jedem Luftkanal (2a, 2b) ein Gebläse (3a, 3b) vorgesehen ist, welche die zu konditionierende Luft in die Luftkanäle ansaugen und darin transportieren. Dadurch, dass mehrere Gebläse vorgesehen sind, lässt sich der Luftdurchsatz, d.h. der Maximalluftmassenstrom, erhöhen. Ferner können durch die Erhöhung der Anzahl der Gebläse - normalerweise ist nur ein einziges Gebläse vorgesehen - kleinere Gebläse vorgesehen werden. Die einzelnen Gebläse können freier im Luftkanalsystem positioniert werden. Ferner entfallen aufwendige Klappenanordnungen zur Steuerung des Luftstromes. Der erforderliche Bauraum kann somit verkleinert werden.

Alternativ sind die Verdampfer derart ausgebildet, dass sie als zwei Teilbereiche einer Baueinheit ausgebildet sind und in einem der beiden Teilbereiche ein Kältespeichermedium enthalten ist, wobei die zu konditionierende Luft wahlweise durch jeden Teilbereich einzeln oder durch beide Teilbereiche gemeinsam leitbar ist. Eine derartige Ausgestaltung ist insbesondere in Hinblick auf einen Idle-stop-Betrieb sehr vorteilhaft, da der entsprechende Verdampfer bzw. Teilbereich des Verdampfers direkt durch ein eigenes Gebläse mit Luft beaufschlagt werden kann, so dass optimale Betriebsbedingungen einstellbar sind.

Vorzugsweise ist einer der Luftkanäle lufteinlass- und luftauslassseitig mit dem Fahrzeuginnenraum verbunden. Dies ermöglicht eine Optimierung des Umluftbetriebs, insbesondere auch des Idle-stop-Betriebs. Vorzugsweise durchströmt die Luft im Idle-stop-Betrieb nur den entsprechenden Verdampfer bzw. Teilbereich des Verdampfers, der ein Kältespeichermedium enthält. So kann relativ trockene Luft aus dem Fahrzeuginnenraum über den Verdampfer bzw. Teilbereich des Verdampfers strömen.

Vorzugsweise ist einer der Luftkanäle lufteinlassseitig mit der Außenseite des Kraftfahrzeugs und mit dem Fahrzeuginnenraum verbunden ist und luftauslassseitig mit dem Fahrzeuginnenraum verbunden. Dies ermöglicht eine Optimierung des Frischluft- und/oder Umluftbetriebs, wobei vorzugsweise auch beliebige Mischformen möglich sind. Dies ist insbesondere beim Beheizen des Fahrzeuginnenraumes vorteilhaft. So kann eine schnelle Innenraumaufheizung bei geringen Innen- und Außentemperaturen unter Nutzung von Umluft, jedoch unter Vermeidung von Scheibenbeschlag auf Grund eines zu hohem Umluftanteils ermöglicht werden.

Vorzugsweise ist einer der Luftkanäle lufteinlassseitig mit der Außenseite des Kraftfahrzeugs und luftauslassseitig mit dem Fahrzeuginnenraum verbunden ist. Dies ermöglicht eine Optimierung des Frischluftbetriebs.

Vorzugsweise sind Sensoren zur Messung der Luftfeuchtigkeit und/oder Temperatur vorgesehen. Dies ermöglicht eine Optimierung des Betriebs der Klimaanlage, wobei hierfür zusätzlich eine Logikschaltung vorgesehen ist, welche in Abhängigkeit der Messergebnisse der Sensoren die Steuerung der einzelnen Gebläse übernimmt. So kann beispielsweise eine schnelle Innenraumaufheizung bei geringen Innen- und Außentemperaturen unter Vermeidung von Scheibenbeschlag auf Grund von zu hohem Umluftanteil der dem Fahrzeuginnenraum zugeführten Luft ermöglicht werden.

Im Folgenden wird die Erfindung anhand eines Ausführungsbeispiels unter Bezugnahme auf die Zeichnung im Einzelnen erläutert. Die einzige Zeichnung zeigt eine schematische Darstellung eines Teilbereichs der erfindungsgemäßen Klimaanlage.

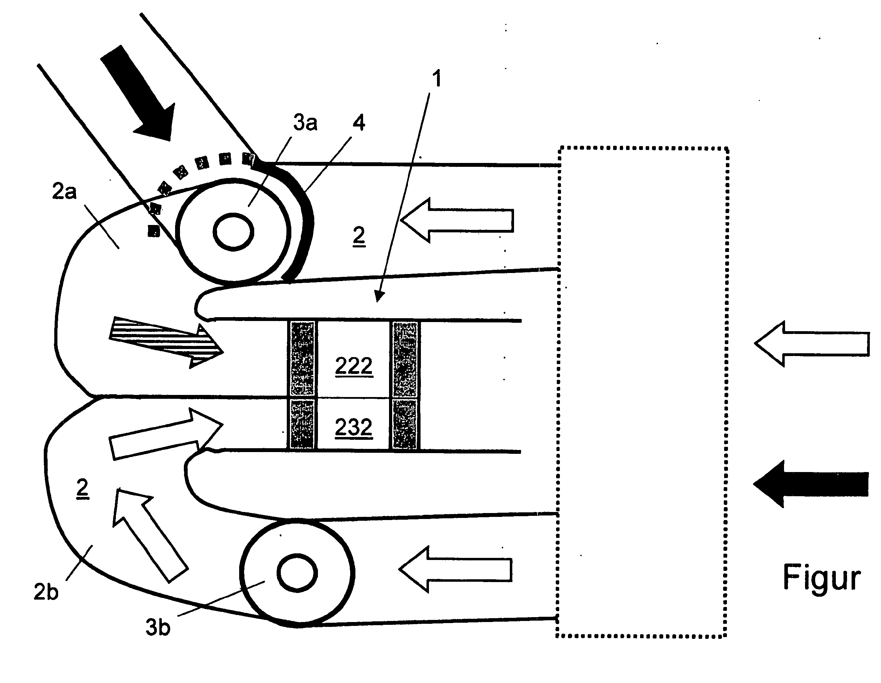

Eine erfindungsgemäße Klimaanlage 1 (nur teilweise in der Figur dargestellt), wie sie in der DE 101 56 944 A1 als erstes Ausführungsbeispiel beschrieben und in den Figuren 1 und 2 der DE 101 56 944 A1 dargestellt ist, weist einen Kältemittelkreislauf 212, in dem ein Kompressor 214, ein Kältemittelkondensator 216, ein Kältemittelsammler 218, ein Expansionsventil 220 und ein erster Verdampfer 222 über Kältemittelleitungen 224, 226, 228, 230 miteinander verbunden sind, auf. Kältemittelseitig parallel zu dem ersten Verdampfer 222 ist ein zweiter Verdampfer 232 in den Kältemittelkreislauf 212 eingebunden, wobei von der Kältemittelleitung 226 eine Kältemittelleitung 234 abzweigt, die nach dem ersten Verdampfer 222 in die Kältemittelleitung 230 mündet. Vor dem zweiten Verdampfer 232 ist ein Expansionsorgan 236 und ein Absperrventil 238 in der Kältemittelleitung 234 angeordnet. Über das Absperrventil 238 kann der Kältemitteldurchfluss durch den zweiten Verdampfer 232 gesperrt werden. Ebenso ist nach dem ersten Verdampfer 222 ein Absperrventil 240 vorgesehen, so dass auch der Kältemitteldurchfluss durch den ersten Verdampfer 222 absperrbar ist.

Die Luft wird durch Luftkanäle 2 geleitet. Hierbei ist ein gabelförmiger Luftkanal 2a vorgesehen, wobei ein erster Zweig mit der Außenseite des Kraftfahrzeugs in Verbindung steht. Der erste Zweig mündet - in normaler Strömungsrichtung der Luft - an der Gabelung, an der ein erstes Gebläse 3a angeordnet ist. Der zweite Zweig des gabelförmigen Luftkanals 2a steht -entgegen der normalen Strömungsrichtung der Luft - mit dem Fahrzeuginnenraum in Verbindung. Der dritte Zweig des gabelförmigen Luftkanals 2a mündet, ausgehend von der Gabelung in Richtung der normalen Strömungsrichtung der Luft gesehen wiederum im Fahrzeuginnenraum, nachdem er den ersten Verdampfer 222 passiert hat. Der Fahrzeuginnenraum ist in der Figur symbolisch als gepunkteter Kasten dargestellt. Die Steuerung der Luftzufuhr über den ersten Zweig und/oder den zweiten Zweig des Luftkanals 2a erfolgt mit Hilfe einer Klappe 4, die am Gebläse 3a angeordnet ist. Somit arbeitet der erste Luftkanal 2a, je nach Stellung der Klappe 4, sowohl im Umluft- (wie gestrichelt dargestellt) als auch Frischluftbetrieb (wie in einer durchgehenden Linie dargestellt) als auch in beliebigen Mischbetriebsformen. In der Figur ist die Umluft durch weiße Pfeile, die Umgebungsluft durch schwarze Pfeile und Mischluft durch einen gestreiften Pfeil dargestellt.

Ferner ist, getrennt vom Luftkanal 2a, ein Luftkanal 2b vorgesehen, der - in Richtung der normalen Strömungsrichtung der Luft - vom Fahrzeuginnenraum ausgehend über ein zweites Gebläse 3b und den zweiten Verdampfer 232 wiederum im Fahrzeuginnenraum mündet. Im Gegensatz zu den in der DE 101 56 944 A1 beschriebenen Luftklappen und dem dargestellten Luftstromsteuerelement dienen beim vorliegenden Ausführungsbeispiel ausschließlich die beiden Gebläse 3a und 3b der Steuerung des Luftstromes in Bezug auf die beiden Verdampfer 222 und 232. Somit arbeitet der zweite Luftkanal 2b ausschließlich im Umluftbetrieb, insbesondere in sogenannten Idle-stop-Situationen.

Ausgestaltungen der Klimaanlage, insbesondere entsprechend dem in der DE 101 56 944 A1 beschriebenen zweiten Ausführungsbeispiel oder der Variante hierzu, sind möglich.

Ferner kann die Anzahl an Luftkanälen und gegebenenfalls auch die Zahl der Verdampfer erhöht werden.

### Bezugszeichenliste

- 1: Klimaanlage
- 2, 2a, 2b: Luftkanäle
- 3a, 3b: Gebläse
- 4: Klappe
- 212: Kältemittelkreislauf (vgl. DE 101 56 944 A1)
- 214: Kompressor (vgl. DE 101 56 944 A1)
- 216: Kältemittelkondensator (vgl. DE 101 56 944 A1)
- 218: Kältemittelsammler (vgl. DE 101 56 944 A1)
- 220: Expansionsventil (vgl. DE 101 56 944 A1)
- 222: erster Verdampfer (vgl. auch DE 101 56 944 A1)
- 224, 226, 228, 230: Kältemittelleitungen (vgl. DE 101 56 944 A1)
- 232: zweiter Verdampfer (vgl. auch DE 101 56 944 A1)
- 234: Kältemittelleitung (vgl. DE 101 56 944 A1)
- 236: Expansionsorgan (vgl. DE 101 56 944 A1)
- 238: Absperrventil (vgl. DE 101 56 944 A1)
- 240: Absperrventil (vgl. DE 101 56 944 A1)

## Patentansprüche

1. Klimaanlage für ein Kraftfahrzeug mit einem in einem Kältemittelkreislauf (212) angeordnetem Kompressor (214) und zwei in einem gemeinsamen Luftführungsgehäuse angeordneten Verdampfern (222, 232) zum Abkühlen von zu konditionierender Luft für den Fahrzeuginnenraum, von denen einer (232) zusätzlich ein Kättespeichermedium enthält, wobei die zu konditionierende Luft wahlweise durch jeden Verdampfer (222, 232) einzeln oder durch beide Verdampfer (222, 232) gemeinsam in den Fahrzeuginnenraum leitbar ist, **dadurch gekennzeichnet, dass** die zu konditionierende Luft durch mindestens zwei Luftkanäle (2) den Verdampfern (222, 232) zuführbar ist, wobei in jedem Luftkanal (2a, 2b) ein Gebläse (3a, 3b) vorgesehen ist.

2. Klimaanlage nach Anspruch 1, **dadurch gekennzeichnet, dass** die Verdampfer (222, 232) als Teilbereiche einer Baueinheit ausgebildet sind.

3. Klimaanlage nach Anspruch 1 oder 2, **dadurch gekennzeichnet, dass** im eingebauten Zustand einer der Luftkanäle (2b) lufteinlassseitig mit dem Fahrzeuginnenraum verbunden ist.

4. Klimaanlage nach einem der vorhergehenden Ansprüche, **dadurch gekennzeichnet, dass** im eingebauten Zustand einer der Luftkanäle (2a) lufteinlassseitig mit der Außenseite des Kraftfahrzeugs verbunden ist.

5. Klimaanlage nach einem der vorhergehenden Ansprüche, **dadurch gekennzeichnet, dass** ein Luftkanal (2a) gabelförmig ausgebildet ist, wobei ein erster Zweig im eingebauten Zustand mit der Außenseite des Kraftfahrzeugs in Verbindung steht und ein zweiter Zweig mit dem Fahrzeuginnenraum in Verbindung steht.

6. Klimaanlage nach Anspruch 5, **dadurch gekennzeichnet, dass** zur Steuerung der Luftzufuhr über den ersten und/oder zweiten Zweig des Luftkanals (2a) eine Klappe (4) vorgesehen ist.

7. Klimaanlage nach einem der vorhergehenden Ansprüche, **dadurch gekennzeichnet, dass** Sensoren zur Messung der Luftfeuchtigkeit und/oder Temperatur vorgesehen sind.

8. Verfahren zum Betreiben einer Klimaanlage (1) nach einem der vorstehenden Ansprüche, **dadurch gekennzeichnet, dass** den Verdampfern über mindestens zwei Luftkanäle (2a, 2b) Luft je nach Steuerung von einem oder beiden Gebläsen (3a, 3b) zugeführt wird.

9. Verfahren nach Anspruch 8, **dadurch gekennzeichnet, dass** im Idle-Stop-Betrieb die Luft ausschließlich durch den Verdampfer (232) mit Kältespeichermedium geleitet wird.

10. Verfahren nach Anspruch 8 oder 9 zum Betreiben einer Klimaanlage (1) nach Anspruch 7, **dadurch gekennzeichnet, dass** die Luftfeuchtigkeit und/oder Temperatur außen und innen mittels Sensoren gemessen und die Gebläse (3a, 3b) in Abhängigkeit der Messergebnisse, mittels einer Logikschaltung gesteuert werden.

## Claims

1. An air conditioning system for a motor vehicle, having a compressor (214) positioned in a refrigerant circuit (212) and two evaporators (222, 232) positioned in a common air conduction housing for cooling air to be conditioned for the interior of the vehicle, one (232) of which also contains a cold accumulating medium, it being possible to feed the air to be conditioned either through each evaporator (222, 232) individually or through both evaporators (222, 232) together into the interior of the vehicle,
**characterised in that**
the air to be conditioned can be supplied to the evaporators (222, 232) by at least two air ducts (2), a fan (3a, 3b) being provided in each air duct (2a, 2b).

2. An air conditioning system in accordance with claim 1,
**characterised in that**
the evaporators (222, 232) are designed as sub-elements of a module.

3. An air conditioning system in accordance with claim 1 or 2,
**characterised in that**
when fitted, one of the air ducts (2b) is connected on the air intake side to the interior of the vehicle.

4. An air conditioning system in accordance with one of the preceding claims,
**characterised in that**
when fitted, one of the air ducts (2a) is connected on the air intake side to the exterior of the motor vehicle.

5. An air conditioning system in accordance with one of the preceding claims,
**characterised in that**
one air duct (2a) is bifurcated in design, when fitted a first branch being connected to the exterior of the motor vehicle and a second branch being connected to the interior of the vehicle.

6. An air conditioning system in accordance with claim 5,
**characterised in that**
a valve (4) is provided to control the air supply via the first and/or second branch of the air duct (2a).

7. An air conditioning system in accordance with one of the preceding claims,
**characterised in that**
sensors are provided to measure the air humidity and/or temperature.

8. A process for operating an air conditioning system (1) in accordance with one of the preceding claims,
**characterised in that**
air is supplied to the evaporators via at least two air ducts (2a, 2b) depending on the actuation of one or both fans (3a, 3b).

9. A process in accordance with claim 8,
**characterised in that**
in idle/stop mode the air is conducted exclusively through the evaporator (232) with cold accumulating medium.

10. A process in accordance with claim 8 or 9,
**characterised in that**
the air humidity and/or temperature both inside and outside are measured by means of sensors and the fans (3a, 3b) are actuated dependent on the measurement results by means of a logic circuit.

## Revendications

1. Appareil de climatisation pour un véhicule automobile, comprenant un compresseur (214) disposé dans un circuit frigorifique (212) et deux évaporateurs (222, 232) disposés dans un boîtier de guidage d'air commun pour le refroidissement de l'air à conditionner pour l'espace intérieur du véhicule, dont un (232) contient en plus un milieu accumulateur de froid, sachant que l'air à conditionner peut être guidé au choix dans l'espace intérieur du véhicule à travers chaque évaporateur (222, 232) séparément ou à travers les deux évaporateurs (222, 232) ensemble, **caractérisé en ce que** l'air à conditionner peut être acheminé aux évaporateurs (222, 232) par au moins deux gaines d'air (2), sachant que dans chaque gaine d'air (2a, 2b) est prévue une soufflante (3a, 3b).

2. Appareil de climatisation selon la revendication 1, **caractérisé en ce que** les évaporateurs (222, 232) sont configurés comme zones partielles d'une unité de construction.

3. Appareil de climatisation selon la revendication 1 ou 2, **caractérisé en ce qu'**à l'état monté, une des gaines d'air (2b) est reliée côté entrée d'air à l'espace intérieur du véhicule.

4. Appareil de climatisation selon l'une des revendications précédentes, **caractérisé en ce qu'**à l'état monté, une des gaines d'air (2a) est reliée côté entrée d'air au côté extérieur du véhicule.

5. Appareil de climatisation selon l'une des revendications précédentes, **caractérisé en ce qu'**une des gaines d'air (2a) est configurée en forme de fourche, sachant qu'une première branche communique à l'état monté avec l'extérieur du véhicule et qu'une deuxième branche communique avec l'espace intérieur du véhicule.

6. Appareil de climatisation selon la revendication 5, **caractérisé en ce qu'**un volet (4) est prévu pour la commande de l'arrivée d'air par la première et/ou la deuxième branche de la gaine d'air (2a).

7. Appareil de climatisation selon l'une des revendications précédentes, **caractérisé en ce que** des capteurs sont prévus pour la mesure de l'humidité de l'air et/ou de la température.

8. Procédé d'exploitation d'un appareil de climatisation (1) selon l'une des revendications précédentes, **caractérisé en ce que** l'air est amené aux évaporateurs par au moins deux gaines d'air (2a, 2b), selon la commande, de l'une ou des deux soufflantes (3a, 3b).

9. Procédé selon la revendication 8, **caractérisé en ce que** dans le mode « marche à vide-stop », l'air est acheminé exclusivement à travers l'évaporateur (232) comprenant le milieu accumulateur de froid.

10. Procédé selon la revendication 8 ou 9 pour l'exploitation d'un appareil de climatisation (1) selon la revendication 7, **caractérisé en ce que** l'humidité de l'air et/ou la température à l'extérieur et à l'intérieur sont mesurées au moyen de capteurs et **en ce que** les soufflantes (3a, 3b) sont commandées en fonction du résultat des mesures au moyen d'un circuit logique.
